# EUROPEAN PATENT SPECIFICATION

(11) **EP 3 562 864 B1**
(45) Date of publication and mention of the grant of the patent: **19.11.2025**
(21) Application number: 17840521.3
(22) Date of filing: 29.12.2017
(51) Int. Cl.: C08G 73/10, C08G 65/40, C08J 5/18

(54) **METHOD OF MAKING A POLYETHERIMIDE AND POLYETHERIMIDE PRODUCED THEREBY**
VERFAHREN ZUR HERSTELLUNG EINES POLYETHERIMIDS UND DAMIT HERGESTELLTES POLYETHERIMID
PROCÉDÉ DE FABRICATION D'UN POLYÉTHERIMIDE ET POLYÉTHERIMIDE AINSI PRODUIT

(30) Priority: 31.12.2016 US 201662441236 P
(43) Date of publication of application: 06.11.2019
(73) Proprietor: SHPP Global Technologies B.V., 4612 PX Bergen op Zoom (NL)
(72) Inventor: CHAULAGAIN, Mani Raj, Mt. Vernon Indiana 47620 (US); ODLE, Roy Ray, Mt. Vernon Indiana 47620 (US); GUGGENHEIM, Thomas Link, Mt. Vernon Indiana 47620 (US)
(74) Representative: Office Freylinger
(86) International application number: PCT/US2017/068895
(87) International publication number: WO 2018/126110

(56) References cited:
- WO-A1-2015/160935
- US-A- 3 838 097

## Description

### BACKGROUND

Polyetherimides ("PEIs") are amorphous, transparent, high performance polymers typically having a glass transition temperature (Tg) of greater than 180°C. PEIs further have high strength, heat resistance, modulus, and broad chemical resistance, and therefore are widely used in applications as diverse as automotive, telecommunication, aerospace, electrical/electronic, transportation, and healthcare.

One process for the manufacture of polyetherimides is by polymerization of alkali metal salts of dihydroxy aromatic compounds, such as bisphenol A disodium salt ("BPANa₂"), with a substituted bisphthalimide such as a bis(halophthalimide), generally in the presence of a polymerization catalyst. For example, polyetherimides can be produced by polymerization of BPANa₂ with 1,3-bis[N-(4-chlorophthalimido)]benzene ("4-ClPAMI"). Other isomers of ClPAMI can also be used, either alone or in combination. Substituted bisphthalimides are generally produced by imidization of a substituted or halophthalic anhydride with an organic diamine.

WO2015/160935 A1 discloses a method of manufacture of a bis(phthalimide) composition that includes reacting, in the presence of molten diphenyl sulfone, sulfolane, or a combination comprising at least one of the foregoing, a substituted phthalic anhydride with an organic diamine. The product mixture can be directly employed in the preparation of polyetherimides and other polyether polymers.

The above-described polymerization generally requires the synthesis and purification of the substituted bisphthalimides and the alkali metal salts of dihydroxy aromatic compounds separately, followed by polymerization to provide the polyetherimide. Thus, there remains a need in the art for an improved process for the manufacture of polyetherimides that does not require separate monomer syntheses. In particular, it would be advantageous if a substituted bisphthalimide, an alkali metal salt of the dihydroxy aromatic compound, and the corresponding polyetherimide could be made in situ in a single reaction vessel, without isolation and purification of any individual monomer component.

### BRIEF DESCRIPTION

A method of making a polyetherimide includes: contacting in a reaction vessel a reactive substituted phthalic anhydride of the formula 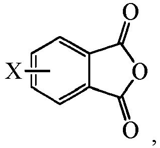 an organic diamine of the formula

H₂N-R-NH₂,

optionally, a chain terminating agent, and optionally a imidization catalyst, in a polar aprotic solvent under conditions effective to provide a reaction mixture comprising a substituted bisphthalimide of the formula 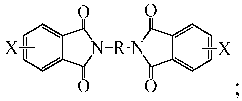 and
adding to the reaction mixture in the reaction vessel an aromatic dihydroxy compound of the formula HO-Z-OH; a base comprising an alkali metal carbonate, an alkali metal phosphate, an alkali metal bicarbonate, an alkali metal acetate, or a combination comprising at least one of the foregoing; optionally, a chain termination agent; and a phase transfer catalyst comprising a hexaalkylguanidinium salt; under conditions effective to provide a product mixture comprising the polyetherimide; wherein, in the foregoing formulas, X is chloro, bromo, fluoro, iodo, nitro, or a combination comprising at least one of the foregoing; R is a C₆₋₂₀ aromatic hydrocarbon group or a halogenated derivative thereof, a straight or branched chain C₂₋₂₀ alkylene group, or a halogenated derivative thereof, a C₃₋₈ cycloalkylene group or halogenated derivative thereof, or a combination comprising at least one of the foregoing; and Z is a group of the formula 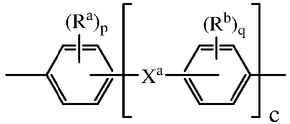 wherein R^{a} and R^{b} are each independently a halogen atom or a monovalent C₁₋₆ alkyl group, p and q are each independently integers of 0 to 4, c is 0 to 4, and X^{a} is a single bond, -O-, -S-, -S(O)-, -SO₂-, -C(O)-, or a C₁₋₁₈ organic bridging group.

The above described and other features are exemplified by the following figures and detailed description.

### DETAILED DESCRIPTION

The present inventors have surprisingly found that it is now possible to make substituted bisphthalimides, alkali metal salts of dihydroxyaromatic compounds, and the corresponding polyetherimides in a single reaction vessel (also known as a "one pot" method). The substituted bisphthalimides can be made in polar aprotic solvents, for example diphenyl sulfone or tetramethylene sulfone (also referred to as sulfolane). The substituted bisphthalimides can then be used directly for preparation of a polyetherimide by adding an aromatic dihydroxy compound and a base to the same reaction vessel to generate an alkali metal salt of the aromatic dihydroxy compound in situ. No separation or purification of the bisphthalimide is required before the displacement polymerization reaction, and advantageously, the alkali metal salt of the dihydroxy aromatic compound need not be pre-formed prior to addition to the reaction vessel containing the bisphthalimide. In a further advantageous feature, a phase transfer polymerization catalyst is not required for the polymerization.

Accordingly, a method of making a polyetherimide represents an aspect of the present disclosure. The polyetherimide is prepared first by imidization of a substituted phthalic anhydride with an organic diamine to form a bisphthalimide, followed by polymerization of the bisphthalimide at the substituted position. In this method, a reactive substituted phthalic anhydride of formula (1) is contacted in a reaction vessel with an organic diamine of formula (2).

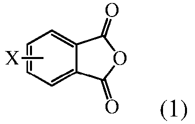

H₂N-R-NH₂ (2)

In formula (1), X is a leaving group, such as a nitro group or a halogen. Specifically, X can be chloro, bromo, fluoro, iodo, nitro, or a combination comprising at least one of the foregoing. Preferably X is chloro. For example, the reactive substituted phthalic anhydride can comprise 4-chlorophthalic anhydride, 3-chlorophthalic anhydride, or a combination comprising at least one of the foregoing, more preferably wherein the reactive substituted phthalic anhydride comprises 4-chlorophthalic anhydride.

R in formula (2) is a substituted or unsubstituted divalent organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing. In some embodiments R is divalent group of one or more of the following formulas (3) 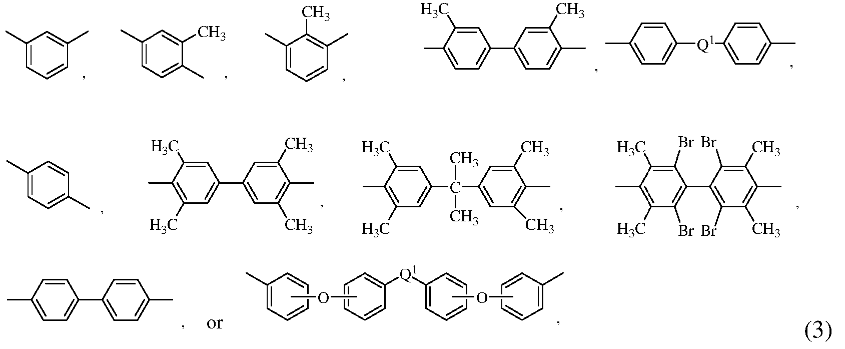 wherein Q¹ is -O-, -S-, -C(O)-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent or at least 50 mole percent of the R groups contain sulfone groups, and in other embodiments no R groups contain sulfone groups.

Illustrative examples of organic diamine compounds of formula (2) include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether (also known as 4,4'-oxydianiline). Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In some embodiments the organic diamine is m-phenylenediamine, p-phenylenediamine, bis(4-aminophenyl) ether, 4,4'-diaminodiphenyl sulfone, 3,4'-diaminodiphenyl sulfone, 3,3'-diaminodiphenyl sulfone, or a combination comprising at least one of the foregoing. In some embodiments, the organic diamine is m-phenylenediamine, bis(4-aminophenyl) ether, or a combination comprising at least one of the foregoing.

Contacting the reactive substituted phthalic anhydride and the organic diamine is in a polar aprotic solvent, preferably a aprotic solvent having a high boiling point, for example, greater than 140°C, or greater than 160°C, or greater than 180°C. Illustrative examples of polar aprotic solvents can include sulfolane, diphenyl sulfone, dimethyl sulfoxide, aliphatic amides such as N-methylpyrrolidinone, N,N-dimethylacetamide, dimethylformamide, hexamethylphosphoramide, anisole, veratrole, diphenylether, phenetole, and ionic liquids such as trioctylmethylammonium bis(trifluoromethylsulfonyl)imide, 1-butyl-3-methylimidazolium hexafluorophosphate ([BMIM][PF₆]), trihexyl(tetradecyl)ammonium bis(trifluoromethanesulfonyl)imide, ([N_{6,4,4,14}][NTf₂]), 1-n-butyl-3-methylimidazolium chloride ([C₄mim][Cl]), 1-n-butyl-3-methylimidazolium hexafluorophosphate ([C₄mim][PF₆], and the like. A combination comprising at least one of the foregoing can be used. In some embodiments, the polar aprotic solvent comprises sulfolane, diphenyl sulfone, or a combination comprising at least one of the foregoing.

A chain terminating agent can be present during imidization in particular a monofunctional compound, for example, a monofunctional compound that is capable of reacting with an amine group or an anhydride group. Exemplary compounds include anyhydrides and their diacids, and amines, for example monofunctional aromatic anhydrides such as phthalic anhydride (or the diacid thereof), an aliphatic monoanhydride such as maleic anhydride (or the diacid thereof), or monofunctional aldehydes, ketones, esters isocyanates, aromatic monoamines such as aniline, or C₁-C₁₈ linear, branched or cyclic aliphatic monoamines. A monofunctional bisphthalimide can also be added before or during imidization. The amount of endcapping agent that can be added depends on the desired amount of chain terminating agent, and can be, for example, more than 0 to 10 mole percent (mol%), or 0.1 to 10 mol%, or 0.1 to 6 mol%, based on the moles of endcapping agent and amine or anhydride reactant.

Contacting of the reactive substituted phthalic anhydride, the organic diamine, and the chain terminating agent in the polar aprotic solvent is done under conditions effective to provide a reaction mixture comprising the substituted bisphthalimide. The percent solids, temperature, time, and pressure during the contacting can be adjusted to effectively provide the substituted bisphthalimide. For example, a higher temperature can be effective when the pressure is increased. The precise conditions can be determined by one of ordinary skill in the art without undue experimentation using the guidelines described herein.

Suitable conditions can include, for example, contacting the reactive substituted phthalic anhydride, the organic diamine, and the optional chain terminating agent in the solvent at a temperature of at least 130°C, or 150° to 275°C, or 160 to 250°C, or 170 to 200°C. Heating below these temperatures can lead to incomplete reaction, or lengthy reaction times. Heating above these temperatures can lead to undesirable side reactions. The time can vary depending on the temperature and pressure used. It can be desirable to heat for as short a time as possible for efficiency and to decrease formation of any side products. For example, the contacting of the reactive substituted phthalic anhydride and the organic diamine can be for a time of 0.5 to 30 hours, or 1 to 20 hours, or 1 to 10 hours, or 2 to 8 hours, or 3 to 7 hours. Atmospheric or superatmospheric pressure can be used, for example up to 5 atmospheres, to facilitate the use of high temperatures without causing solvent to be lost by evaporation.

The the reactive substituted phthalic anhydride, the organic diamine, the optional chain terminating agent, and the polar aprotic solvent can be combined in any order. In some embodiments, the polar aprotic solvent can first be heated, then the substituted phthalic anhydride, optional monoanhydride chain terminating agent, and the organic diamine can be added to the heated solvent either alone or in combination. In a specific embodiment, when the solvent comprises diphenyl sulfone, the diphenyl sulfone can first be heated to a molten state, then the substituted phthalic anhydride and the organic diamine can be added to the molten diphenyl sulfone, either alone or in combination.

In some embodiments, the contacting of the reactive substituted phthalic anhydride, the organic diamine, and the chain-terminating agent (i.e., imidization) can be conducted with a hexaalkylguanidinium salt, like hexaethylguanidium chloride (HEGCl). Other imidization catalysts are described, for example, in US2014/0099510 A1. The catalyst, is present in an amount effective to accelerate the reaction, for example about 0.1 to 10.0 mol%, or 0.1 to 5.0 mol%, or 0.1 to 4.0 mol%, or 0.1 to 3.0 mol%, or 0.1 to 2.0 mol%, or 0.5 to 4.0 mol%, or 1.0 to 4.0 mol%, or 1.5 to 3.5 mol% each based on the moles of diamine.

The substituted phthalic anhydride, organic diamine, and the solvent can be combined in amounts such that the total solids content during the reaction to form the bisphthalimide does not exceed 80 weight percent (wt%), or does not exceed 60 wt%. For example, the total solids content can be 1 to 40 wt%, or 1 to 30 wt%, or 1 to 25 wt%, or 15 to 25 wt%. "Total solids content" refers to the proportion of the reactants as a percentage of the total weight including liquids (such as solvent) present in the reaction at any given time.

A molar ratio of substituted phthalic anhydride to organic diamine of 1.95:1 to 2.05:1, or 1.98:1 to 2.02:1, or 1.98:1 to 2.01:1, or 2:1 can be used. While other ratios can be employed, a slight excess of anhydride or diamine can be desirable. A proper stoichiometric balance between substituted phthalic anhydride and organic diamine is preferably maintained in order to prevent formation of undesirable by-products that can limit the molecular weight of the final polyetherimide product prepared from the bisphthalimide, or result in polymers with amine end groups. Thus, in some embodiments, the method can optionally further comprise analyzing the reaction mixture to determine the molar ratio of substituted phthalic anhydride to organic diamine, and if necessary, adding substituted phthalic anhydride or organic diamine to the analyzed reaction mixture to adjust the molar ratio of the substituted phthalic anhydride to the organic diamine to the desired value, for example, 1.98:1 to 2.02:1, or other ratios as described above. A method for analyzing the reaction mixture to determine the molar ratio of substituted phthalic anhydride to organic diamine is further described in the working examples below.

The bisphthalimide provided by contacting the reactive substituted phthalic anhydride and the organic diamine in the polar aprotic solvent is of the formula (4) 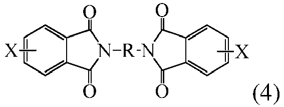 wherein X and R are as described above in formulas (1) and (2), respectively. In some embodiments, X is chloro and R is meta-phenylene or diarylene ether.

The reaction mixture comprising the bisphthalimide is used for the subsequent polymerization step without purification or isolation. In some embodiments, the reaction mixture includes less than or equal to 5 mol% of an impurity having a structure derived from at least one monomer (e.g., the substituted phthalic anhydride, the organic diamine, or both) prior to the polymerization step. In some embodiments, the impurity comprises residual reactive substituted phthalic anhydride or a derivative thereof, a product of reaction of one mole of the reactive substituted phthalic anhydride and one mole of the organic diamine, or a combination comprising at least one of the foregoing.

Advantageously, the polymerization step is conducted in the same reaction vessel containing the reaction mixture comprising the bisphthalimide. Accordingly, the method further comprises adding to the reaction mixture, in the same reaction vessel, an aromatic dihydroxy compound, a base, and optionally, a phase transfer catalyst. The aromatic dihydroxy compound is of formula (5)

HO-Z-OH (5)

wherein Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (6) 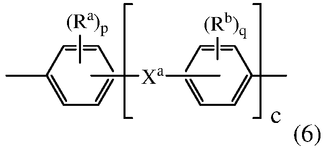 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (6a) 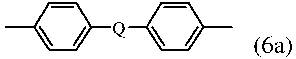 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). A combination of different aromatic dihydroxy compounds of formula (5) can be used to provide a copolymer. In a specific embodiment Z is a derived from bisphenol A, such that Q in formula (3a) is 2,2-isopropylidene.

In addition to the aromatic dihydroxy compound, a base is also added to the reaction mixture. In some embodiments, the base is an alkali metal base. The base can be, for example, an alkali metal carbonate, an alkali metal phosphate, an alkali metal bicarbonate, an alkali metal acetate, or a combination comprising at least one of the foregoing. In some embodiments, the base is preferably an alkali metal carbonate, for example sodium carbonate.

A phase transfer catalyst is added to the reaction mixture. The phase transfer catalyst can be selected such that it is stable (i.e., that it can effect the desired reaction at the desired rate without significant degradation) over the reaction temperature range, which is further described below. The phase transfer comprises hexaalkyl guanidinium salts, for example, hexaalkyl guanidinium chloride.

Following addition of the dihydroxy aromatic compound, the base, and optionally, the phase transfer catalyst, a dialkali metal salt of the dihydroxy aromatic compound can be formed in situ. The dialkali metal salt of the dihydroxy aromatic compound can be of the formula (7)

M⁺⁻O-Z-O⁻⁺M (7)

wherein Z is as defined above, and M is an alkali metal. Alkali metal M can be any alkali metal, for example lithium, sodium, potassium, and cesium. Thus, alkali metal salt (7) can encompass lithium salts, sodium salts, potassium salts, cesium salts, or a combination comprising at least one of the foregoing. Specific alkali metal metals are potassium or sodium. In some embodiments, M is potassium. In some embodiment, M is sodium.

The polymerization can be conducted in the presence of a chain terminating agent that optionally can be formed in situ, or formed during imidization by the addition of a monofunctional compound as described above, or can be added after imidization. Such chain terminating agents include a monofunctional bisphthalimide, or an alkali metal salt of a monohydroxy aromatic compound of formula (8) 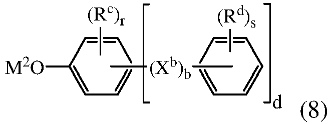 wherein M² is for example lithium, sodium, potassium, or cesium, preferably potassium or sodium, more preferably sodium; R^{c} and R^{d} are each independently the same or different, and are a monovalent C₁₋₁₂ alkyl group, for example methyl; r and s are each independently integers of 0 to 3; d is 0 to 3; and X^{b} is a single bond or a C₁₋₈ alkylene or alkylidene, for example isopropylidene. In a specific embodiment, the chain terminating agent can be an alkali metal salt of a monohydroxy aromatic compound of formula (8) wherein d is 0 and M is potassium or sodium, preferably sodium. Thus, in some embodiments, the chain terminating agent can be an alkali metal salt of phenol (e.g., derived from phenol with Na₂CO₃). The chain terminating agents are useful to control the type of end group in the polymer and to control the molecular weight of the polymer.

Thus, after imidization, the leaving group X of the bisphthalimide (4) is displaced with an alkali metal salt of a dihydroxy aromatic compound through an ether-forming polymerization reaction to provide a product mixture comprising the desired polyetherimide.

The polymerization can be conducted at a temperature and pressure and for a time effective to provide the polyetherimide. The type and amount of chain terminating agent, temperature, time, and pressure during polymerization can be adjusted to effect polymerization. The precise conditions can be determined by one of ordinary skill in the art without undue experimentation using the guidelines provided herein.

For example, the polymerization can be conducted at a temperature of at least 130°C, or 150° to 275°C, or 160 to 250°C, or 170 to 200°C. Heating below these temperatures can lead to incomplete polymerization, or very lengthy processing times. Heating above these temperatures can lead to unwanted side reactions. The time the polymerization is conducted can vary widely depending on the temperature and pressure selected for the polymerization. For example, the polymerization can be for a time of 0.5 to 100 hours, or 1 to 80 hours, or 10 to 75 hours, or 20 to 75 hours. The yellowness index of the polyetherimide can depend on the polymerization time such that the longer the polymerization time, the higher the yellowness index. Thus, in some embodiments, it can be desirable to minimize polymerization times. Atmospheric or superatmospheric pressures can be used, for example, up to 5 atmospheres, to facilitate the use of high temperatures without causing solvent to be lost by evaporation.

In some embodiments, the molar ratio of the dihydroxy aromatic compound to the bisphthalimide can be 0.9:1 to 0.999:1, or 0.95:1 to 0.99:1.

The method can optionally further comprise isolating the polyetherimide from the product mixture, for example by precipitating the polyetherimide with the use of an antisolvent, and filtering the polyetherimide. In some embodiments, the polyetherimide obtained from the product mixture can be washed one or more times, for example with a suitable antisolvent. Exemplary antisolvents can include, for example, a C₁₋₁₂ alkyl ketone solvent (e.g., acetone, methyl ethyl ketone, methyl isobutyl ketone, cyclohexanone, and the like, or a combination comprising at least one of the foregoing), a C₁₋₆ alcohol, water, acetonitrile, methyl ethyl acetate, or the like, or a combination comprising at least one of the foregoing. In some embodiments, the product mixture can be washed one or more times with acetone, a C₁₋₆ alcohol, water, acetonitrile, methyl ethyl acetate, or the like, or a combination comprising at least one of the foregoing. In some embodiments, the method can further comprise drying the isolated polyetherimide, for example using heat, vacuum, or both.

Polyetherimides produced by the methods disclosed herein comprise more than 1, for example, 2 to 1000, or 5 to 500, or 10 to 100 structural units of formula (8) 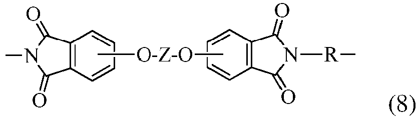 wherein each R and Z is independently the same or different, and is as described above in formulas (2) and (5). The divalent bonds of the -O-Z-O- group are in the 3,3', 3,4', 4,3', or the 4,4' positions. As described above a combination of different amines or different aromatic dihydroxy compounds (or both) can be used to provide copolymers.

In an embodiment in formula (8), R is m-phenylene, p-phenylene, diarylene ether, or a combination comprising at least one of the foregoing, and Z is a divalent group of formula (6a). Alternatively, R is m-phenylene, p-phenylene, diarylene ether, or a combination comprising at least one of the foregoing, and Z is a divalent group of formula (6a) and Q is 2,2-isopropylidene. Alternatively, the polyetherimide can be a copolymer comprising additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety.

In some embodiments, the polyetherimide can have a molecular weight of greater than or equal to 15,000 Daltons (Da), or greater than or equal to 20,000 Da, or 15,000 to 200,000 Da, or 20,000 to 200,000 Da, or 30,000 to 150,000 Da. In some embodiments, the polyetherimide can have a polydispersity index of 2 to 5.

Advantageously, the polyetherimides can be formulated to provide a wide variety of polyetherimide compositions for the manufacture of articles. The polyetherimide composition can, for example, optionally comprise a filler. In some embodiments, it can be desirable to provide a polyetherimide composition that is devoid of a filler. In some embodiments, the polyetherimide composition can include various additives ordinarily incorporated into polymer compositions of this type, with the proviso that the additives are selected so as to not significantly adversely affect the desired properties of the composition. Exemplary additives can include, impact modifiers, fillers, antioxidants, thermal stabilizers, light stabilizers, ultraviolet (UV) light absorbing additives, quenchers, plasticizers, lubricants, mold release agents, antistatic agents, visual effect additives such as dyes, pigments, and light effect additives, flame retardants, anti-drip agents, and radiation stabilizers. Combinations of additives can be used. Combinations of additives can be used. The foregoing additives can be present individually in an amount from 0.005 to 10 wt%, or combined in an amount from 0.005 to 20 wt%, specifically 0.01 to 10 wt%, based on the total weight of the composition. Particulate fillers and reinforcing fillers can also be present.

In some embodiments, the polyetherimide composition can further include at least one additional polymer. Examples of such additional polymers include and are not limited to a polyacetal, poly(C₁₋₆ alkyl)acrylate, polyacrylamide, polyacrylonitrile, polyamide, polyamideimide, polyanhydride, polyarylene ether (e.g., PPE (polyphenylene ether)), polyarylene ether ketone, polyarylene ketone, polyarylene sulfide (e.g., PPS (poly(phenylene sulfide)), polyarylene sulfone (e.g., PPSU (polyphenylene sulfone) and PSU (polysulfone)), polybenzothiazole, polybenzoxazole, polybenzimidazole, polycarbonate, polyester, poly(C₁₋₆ alkyl)methacrylate, polymethacrylamide, cyclic olefin polymer, polyolefin, polyoxadiazole, polyoxymethylene, polyphthalide, polysilazane, polysiloxane, polystyrene, polysulfide, polysulfonamide, polysulfonate, polythioester, polytriazine, polyurea, polyurethane, vinyl polymer, blends and co-polymers thereof, or a combination thereof. Other polymers include fluorinated polymers (e.g. PFA (perfluoroalkoxy alkane), MFA (co-polymer of TFE (tetrafluoroethylene) and PFVE (perfluorinated vinyl ether)), FEP (fluorinated ethylene propylene polymers), PTFE (polytetrafluoroethylene), and blends and co-polymers thereof. When present, the polymer can be used in an amount from more than 0 to 99 wt.%, for example 50 to 95 wt.%, or 1 to 50 wt.%, each based on the total weight of the polyetherimide composition. In some embodiments the polymer is present in an amount of 0.1 to 20 wt.%, or 0.5 to 10 wt.%, each based on the total weight of the polyetherimide composition. In some embodiments, no polymer other than the polyetherimide as described herein is present in the polyetherimide composition.

The polyetherimide composition can be prepared by blending the ingredients under conditions for the formation of an intimate blend. Such conditions often include melt mixing in single or twin screw-type extruders, mixing bowl, or similar mixing devices that can apply a shear to the components. Twin-screw extruders are often preferred due to their more intensive mixing capability and self-wiping capability, over single screw extruders. It is often advantageous to apply a vacuum to the blend through at least one vent port in the extruder to remove volatile impurities in the composition. Often it is advantageous to dry the polyetherimide composition prior to melt mixing. The melt mixing is often done at 290 to 340°C to avoid excessive polymer degradation while still allowing sufficient melting to get an intimate polymer mixture free of any unbelted components. The polymer blend can also be melt filtered using a 40 to 100 micrometer candle or screen filter to remove undesirable black specks or other heterogeneous contaminants.

In an exemplary process, the polyetherimide, any other polymers, and any additives are placed into an extrusion compounder to produce a continuous strand that is cooled and then chopped into pellets. In another procedure, the components are mixed by dry blending, and then fluxed on a mill and comminuted, or extruded and chopped. The composition and any optional components can also be mixed and directly molded, e.g., by injection or transfer molding techniques. Preferably, all of the components are freed from as much water as possible. In addition, compounding is carried out to ensure that the residence time in the machine is short; the temperature is carefully controlled; the friction heat is utilized; and an intimate blend between the components is obtained.

The polyetherimide composition can be formed into an article by any number of methods including shaping, extruding (including profile extrusion), thermoforming, and molding, including injection molding, compression molding, gas assist molding, structural foam molding, and blow molding. In some embodiments, a method of forming an article comprises shaping, extruding, blow molding, or injection molding the composition to form the article. The polyetherimide compositions can also formed into articles using thermoplastic processes such as film extrusion, sheet extrusion, melt casting, blown film extrusion, and calendaring. Coextrusion and lamination processes can be used to form composite multi-layer films or sheets. The article can be a sheet, film, multilayer sheet, multilayer film, molded part, extruded profile, coated part, pellets, powder, foam, fiber, fibrids, flaked fibers, or a combination comprising at least one of the foregoing.

The polyetherimide composition can be molded into an article with any equipment conventionally used for molding thermoplastic compositions, such as a Newbury or van Dorn type injection-molding machine with conventional cylinder temperatures of 250°C to 320°C, and conventional mold temperatures of 55°C to 120°C.

A wide variety of articles can manufactured using the branched polyimide and branched polyetherimide compositions, the polyimide and polyetherimide compositions, and the polymer compositions, for example articles of utility in automotive, telecommunication, aerospace, electrical/electronics, transportation, and healthcare applications. Such articles can include coatings, fibers, matrices for polymer composites, and the like. The articles can be extruded or molded, for example injection molded. Components for electronic devices and components for sterilizable medical articles can be specifically mentioned.

The methods are further illustrated by the following examples, which are non-limiting.

### EXAMPLES

Examples 1-8 demonstrate the one-pot synthesis of a polyetherimide from 4-chlorophthalic anhydride (4ClPA) and bisphenol A (BPA) with various amines and in various polar aprotic solvents. Examples 1 to 5 are comparative examples not containing a phase transfer catalyst.

### Example 1: One-pot synthesis of polyetherimide from 4-chlorophthalic anhydride (4ClPA), metaphenylene diamine (mPD), Bisphenol A (BPA) and sodium carbonate in tetramethylene sulfone (sulfolane).

A 500 milliliter 3-necked, round-bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was charged with 5.409 grams of m-PD (0.05 moles, 1.0 equiv.) and 18.237 grams of 4ClPA (0.1 moles, 2.0 equiv.) followed by the addition of 100 grams warm (40-50°C) sulfolane (to provide a solids content of about 18%) and then heated to 170°C. The temperature was slowly increased to 200°C. The initial solution converted into a thick white slurry of 4ClPAMI in sulfolane. The heating was continued for 4 hours, and the slurry became slightly thinner.

At that point, stoichiometry analysis was conducted. The stoichiometry analysis was carried out using a sample of the 4ClPAMI slurry (23 milligrams) weighed into a 20 milliliter vial. Ortho-dichlorobenzene (o-DCB) (35 milligrams) was added, followed by acetonitrile (10 milliliters). The resulting mixture was sonicated for 5 minutes and filtered into a high performance liquid chromatography (HPLC) vial. The sample was then analyzed by ultra performance liquid chromatography (UPLC) for stoichiometry analysis using an isocratic 55:45 water/acetonitrile UPLC method (injection amount: 0.80 microliters; PDA detection at 278 nanometers; solvent A: 4 liters of deionized water + 3 milliliters H₃PO₄; solvent B: 100% acetonitrile; program: 55:45 (A:B) for 9 minutes; flow rate: 0.313 milliliters per minute; column temperature 35°C). The analysis provides the amount of ClPA, m-PD and monoamine intermediate per gram of o-DCB, which is then converted into the total moles of the components. The ClPAMI stoichiometry and the amount of mPD or ClPA needed for correction can be calculated. If the molar difference between ClPA and monoamine is less than 0.4 mol % ClPA excess or less than 0.2 mol% monoamine excess, no correction is needed. In this example the value is 0.04 mol% ClPA excess, with the analysis indicating the presence of 0.80 mol % of residual 4ClPA and 0.96 mol % of residual monoamine (i.e., the product of reaction of one mole of 4ClPA and one mole of mPD) in the reaction mixture.

To this mixture 11.394 grams of sodium carbonate (Na₂CO₃) (0.107 moles, 2.15 equiv.) and 11.414 grams of BPA (0.05 moles, 1.0 equiv.) were added as solids, and the mixture was left to stir at 200 °C.

Analysis by gel permeation chromatography (GPC) with polystyrene standards showed a weight average molecular weight (Mw) plateau was reached at about 38,000 Da in 64 hours, with a polydispersity index (PDI) of 2.62.

GPC analysis for Example 1 and the subsequent Examples was carried out according to the following procedure. In a 20 milliliter glass vial, about 20 milligrams of the polymer sample was taken and dissolved into 10 milliliters of a quenching solution (quenching solution prepared from 3.5 liters of dichloromethane, 120 milliliters of acetic acid, and 30 milliliters of ortho-dichlorobenzene), followed by filtration with 0.45 micrometer filter into an HPLC vial. The solution was analyzed by GPC relative to polystyrene standards using an HPLC 2695, Waters GPC software using 2487 Dual absorbance detector of wavelength 254 nanometers, and Mixed Bed C, PLgel 5 micrometer, 300 x 7.5 millimeters, P/N 1110-6500 column.

The reaction mixture was poured slowly into a 2 liter beaker containing 1 liter of deionized water while stirring slowly with an overhead stirrer. The polymer solution was solidified, crushed, and blended to a powder. The polymer powder was filtered and washed with water three times with 500 mL portions to remove sulfolane and sodium carbonate. The powdered polymer was dried in a vacuum oven at 150°C.

### Example 2: One-pot synthesis of polyetherimide from 4-chlorophthalic anhydride (4ClPA), oxydianiline (ODA), Bisphenol A (BPA) and sodium carbonate in tetramethylene sulfone (sulfolane).

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was charged with 6.007 grams of ODA (0.03 moles, 1.0 equiv.) and 10.997 grams of 4ClPA (0.06 moles, 2.0 equiv.) followed by the addition of 75 grams of warm (40-50°C) sulfolane (to provide a solids content of about 18%) when heated to 170°C. The temperature was slowly increased to 200°C. The heating was continued for 4 hours. At that point, stoichiometry analysis of the reaction mixture indicated the presence of 0.87 mol % of residual 4ClPA and 0.31 mol % of residual monoamine in the reaction mixture. To this mixture 6.99 grams of Na₂CO₃ (0.066 moles, 2.15 equiv.), 6.711 grams of BPA (0.03 moles, 1.0 equiv.) and 0.158 grams of hexaethylguanidinium chloride (HEGCl) (0.6 mmol, 0.02 equiv.) were added as solids, and the mixture was allowed to stir at 200 °C. GPC analysis relative to polystyrene standards showed a weight average molecular weight (Mw) plateau was reached at 54,600 Da in 64 hours with a PDI of 4.42. The polymer was isolated as described in Example 1.

### Example 3: One-pot synthesis of polyetherimide from 4-chlorophthalic anhydride (4ClPA), metaphenylene diamine (mPD), Bisphenol A (BPA) and sodium carbonate in diphenyl sulfone (DPS).

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was then immersed into an oil bath at 170°C and DPS (75 grams) was added. Once the DPS was completely molten, the overhead stirrer was turned on and 3.245 grams of mPD (0.03 moles, 1.0 equiv.) and 10.997 grams of 4ClPA (0.06 moles, 2.0 equiv.) were added to the flask containing the molten DPS (to provide a solids content of about 15%) at 170°C. The temperature was slowly increased to 200°C. The initial solution converted into a thick white slurry of ClPAMI in DPS. The heating was continued for 4 hours and the slurry became slightly thinner. At that point, stoichiometry analysis of the reaction mixture showed the presence of 0.92 mol % of residual 4ClPA and 1.02 mol % of residual monoamine in the reaction mixture. To the reaction mixture 6.99 grams of Na₂CO₃ (0.066 moles, 2.15 equiv.), 6.711 grams of BPA (0.03 moles, 1.0 equiv.), and 0.158 grams of HEGCl (0.6 mmol, 0.02 equiv.) were added as solids and the mixture was allowed to stir at 200 °C. GPC analysis relative to polystyrene standards showed a weight average molecular weight (Mw) plateau was reached at 69,660 Da in 64 hours with a PDI of 4.26.

The polymer mixture was poured into an aluminum pan without quenching and allowed to cool. The solidified polymer solution was broken into pieces and ground into a powder by a blender. The resulting polymer powder was washed with acetone (3 x 500 milliliters) and the cake was mixed with 500 milliliters of pH 2 deionized water (acidified with hydrochloric acid) and shaken for 30 minutes, followed by filtration and washing with deionized water (3 x 500 milliliters). The polymer cake was finally washed with an additional 100 milliliters of acetone, and dried in a vacuum oven at 150°C.

### Example 4: One-pot synthesis of polyetherimide from 4-chlorophthalic anhydride (4ClPA), oxydianiline (ODA), Bisphenol A (BPA) and sodium carbonate in diphenyl sulfone (DPS).

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was immersed into an oil bath at 170°C and DPS (80 grams) was added. Once the DPS was completely molten, the overhead stirrer was turned on and 10.012 grams of ODA (0.05 moles, 1.0 equiv.) and 18.329 grams of 4ClPA (0.1 moles, 2.0 equiv.) were added to the molten DPS (to provide a solids content of about 25%) at 170°C. The temperature was slowly increased to 200°C. The initial solution converted into a solution of ODA-ClPAMI in DPS. The heating was continued for 4 hours and the slurry became slightly thinner. At that point, stoichiometry analysis of the reaction mixture showed the presence of 0.63 mol % of residual 4ClPA and 0.52 mol % of residual monoamine in the reaction mixture. To the reaction mixture 11.29 grams of Na₂CO₃ (0.106 moles, 2.15 equiv.), 11.229 grams of BPA (0.0495 moles, 0.99 equiv.) and 0.158 grams of HEGCl (0.6 mmol, 0.02 equiv.) were added as solids and the mixture was allowed to stir at 200 °C. GPC analysis relative to polystyrene standards showed a weight average molecular weight (Mw) plateau was reached at 106,900 Da in 20 hours with a PDI of 3.71. The polymer was isolated as described in Example 3.

### Example 5: One-pot synthesis of polyetherimide copolymer from 4-chlorophthalic anhydride (4ClPA), metaphenylene diamine (mPD), dichlorodiphenylsulfone (DCDPS), difluorobenzophenone (DFBP), bisphenol A (BPA) and sodium carbonate in sulfolane using HEGCl as phase transfer catalysts.

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was then immersed into an oil bath at 50°C. Into the flask, 2.164 grams of mPD (0.02 moles) and 7.367 grams of 4ClPA (0.0404 moles) were added. To the mixture in the flask, 100g molten sulfolane was added and the mixture was stirred. The temperature of the oil bath was slowly increased to 200°C. The initial solution converted into a thick white slurry of ClPAMI in sulfolane. The heating was continued for 4 hours and the slurry became slightly thinner. At that point, the UPLC analysis of the reaction mass showed non-detect amount of residual reactants. To the reaction mixture, 4.364g DFBP (0.02 moles), 5.743g DCDPS (0.02 moles) and 13.423g BPA (0.059moles) were added sequentially. To the stirring mixture, 13.711g of Na₂CO₃ (0.129 moles) and 0.413 grams of HEGCl (0.00117 mmol) were added as solids and the mixture was allowed to stir at 200 °C. GPC analysis relative to polystyrene standards showed a weight average molecular weight (Mw) was reached at 35256 Da in 35 hours with a PDI of 3.04. The polymer was isolated as described in Example 1.

### Example 6: One-pot synthesis of polyetherimide copolymer from 4-chlorophthalic anhydride (4ClPA), metaphenylene diamine (mPD), dichlorodiphenylsulfone (DCDPS), bisphenol A (BPA) and sodium carbonate in sulfolane.

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was then immersed into an oil bath at 50°C. Into the flask, 2.164 grams of mPD (0.02 moles) and 7.367 grams of 4ClPA (0.0404 moles) were added. To the mixture in the flask, 100g molten sulfolane was added and the mixture was stirred. The temperature of the oil bath was slowly increased to 200°C. The initial solution converted into a thick white slurry of ClPAMI in sulfolane. The heating was continued for 4 hours and the slurry became slightly thinner. At that point, the UPLC analysis of the reaction mass showed non-detect amount of residual reactants. To the reaction mixture, 5.743g DCDPS (0.02 moles) and 8.948g BPA (0.0392 moles) were added sequentially. To the stirring mixture, 9.14g of Na₂CO₃ (0.086 moles) and 0.276 grams of HEGCl (0.0008 moles) were added as solids and the mixture was allowed to stir at 200 °C. GPC analysis relative to polystyrene standards showed a weight average molecular weight (Mw) was reached to 15091 Da in 35 hours with a PDI of 2.49. The polymer was isolated as described in Example 1.

### Example 7: One-pot synthesis of polyetherimide copolymer from 4-chlorophthalic anhydride (4ClPA), metaphenylene diamine (mPD), difluorobenzophenone (DFBP), bisphenol A (BPA) and sodium carbonate in sulfolane.

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was then immersed into an oil bath at 50°C. Into the flask, 2.164 grams of mPD (0.02 moles) and 7.367 grams of 4ClPA (0.0404 moles) were added. To the mixture in the flask, 100g molten sulfolane was added and the mixture was stirred. The temperature of the oil bath was slowly increased to 200°C. The initial solution converted into a thick white slurry of ClPAMI in sulfolane. The heating was continued for 4 hours and the slurry became slightly thinner. At that point, the UPLC analysis of the reaction mass showed non-detect amount of residual reactants. To the reaction mixture, 4.364g DFBP (0.02 moles) and 8.948g BPA (0.0392 moles) were added sequentially. To the stirring mixture, 9.14g of Na₂CO₃ (0.086 moles) and 0.276 grams of HEGCl (0.0008 moles) were added as solids and the mixture was allowed to stir at 200 °C. GPC analysis relative to polystyrene standards showed a weight average molecular weight (Mw) plateau was reached at 51282 Da in 27 hours with a PDI of 3.56. The polymer was isolated as described in Example 1.

### Example 8: One-pot synthesis of polyetherimide copolymer from 4-chlorophthalic anhydride (4ClPA), metaphenylene diamine (mPD), Oxydianiline (ODA), Bisphenol A (BPA) and sodium carbonate in sulfolane.

A 500 milliliter 3-neck round bottomed flask (24/40) was equipped with an overhead stirrer. The flask was also connected to a nitrogen sweep and a nitrogen blanket. The nitrogen blanket was connected to a bubbler via a Dean-Stark trap with the arm connected to the flask wrapped in a heating tape. The Dean-Stark receiver was topped with a reflux condenser. The flask was then immersed into an oil bath at 50°C. Into the flask, 2.704 grams of mPD (0.025 moles), 5.006 g ODA (0.025 moles) and 18.329 grams of 4ClPA (0.1004 moles) were added. To the mixture in the flask, 100g molten sulfolane was added and the mixture was stirred. The temperature of the oil bath was slowly increased to 200°C. The initial solution converted into a thick white slurry of ClPAMI in sulfolane. The heating was continued for 4 hours and the slurry became slightly thinner. At that point, the UPLC analysis of the reaction mass showed non-detect amount of residual reactants. To the reaction mixture, 11.30g BPA (0.0495 moles), 11.5434g of Na₂CO₃ (0.109 moles) and 0.348 grams of HEGCl with 25% NaCl (0.001 moles) were added as solids were added sequentially and the mixture was allowed to stir at 200 °C. GPC analysis relative to polystyrene standards showed a weight average molecular weight (Mw) was reached to 57909 Da in 33 hours with a PDI of 3.89. The polymer was isolated as described in Example 1.

### Example 9: One-pot synthesis of polyetherimide from 3-chlorophthalic anhydride (3ClPA), metaphenylene diamine (mPD), 4,4'-biphenol (BP) and sodium carbonate in sulfolane.

A 500 milliliter 3-neck round bottomed flask (24/40) is equipped with an overhead stirrer. The flask is also connected to a nitrogen sweep and a nitrogen blanket. The nitrogen blanket is connected to a bubbler via a Dean-Stark trap with the arm connected to the flask wrapped in a heating tape. The Dean-Stark receiver is topped with a reflux condenser. The flask is then immersed into an oil bath at 50°C. Into the flask, 5.409 g of mPD (0.05 moles) and 18.418g of 3ClPA (0.101 moles) are added. To the mixture in the flask, 100g molten sulfolane is added and the mixture is stirred. The temperature of the oil bath is slowly increased to 200°C. The heating is continued for at least 4 hours. At that point, the UPLC analysis of the reaction mass is measured for non-detect amount of residual reactants. To the reaction mixture, 9.124g BP (0.049 moles) is added. To the stirring mixture, 11.529g of Na₂CO₃ (0.108 moles) and 0.336 grams of HEGCl (0.001 moles) are added as solids and the mixture is allowed to stir at 200 °C. GPC analysis relative to polystyrene standards would show the Mw build. The polymer is isolated as described in Example 1.

### Example 10: One-pot synthesis of polyetherimide from 3-chlorophthalic anhydride (3ClPA), metaphenylene diamine (mPD), hydroquinone (HQ) and sodium carbonate in sulfolane.

A 500 milliliter 3-neck round bottomed flask (24/40) is equipped with an overhead stirrer. The flask is also connected to a nitrogen sweep and a nitrogen blanket. The nitrogen blanket is connected to a bubbler via a Dean-Stark trap with the arm connected to the flask wrapped in a heating tape. The Dean-Stark receiver is topped with a reflux condenser. The flask is then immersed into an oil bath at 50°C. Into the flask, 5.409 g of mPD (0.05 moles) and 18.418g of 3ClPA (0.101 moles) are added. To the mixture in the flask, 100g molten sulfolane is added and the mixture is stirred. The temperature of the oil bath is slowly increased to 200°C. The heating is continued for at least 4 hours. At that point, the UPLC analysis of the reaction mass is measured for non-detect amount of residual reactants. To the reaction mixture, 5.395g BP (0.049 moles) is added. To the stirring mixture, 11.529g of Na₂CO₃ (0.108 moles) and 0.336 grams of HEGCl (0.001 moles) are added as solids and the mixture is allowed to stir at 200 °C. GPC analysis relative to polystyrene standards would show the Mw build. The polymer is isolated as described in Example 1.

### Example 11: One-pot synthesis of polyetherimide from 3-chlorophthalic anhydride (3ClPA), metaphenylene diamine (mPD), dichlorodiphenylsulfone (DCDPS), 4,4'-biphenol (BP) and sodium carbonate in sulfolane.

A 500 milliliter 3-neck round bottomed flask (24/40) is equipped with an overhead stirrer. The flask is also connected to a nitrogen sweep and a nitrogen blanket. The nitrogen blanket is connected to a bubbler via a Dean-Stark trap with the arm connected to the flask wrapped in a heating tape. The Dean-Stark receiver is topped with a reflux condenser. The flask is then immersed into an oil bath at 50°C. Into the flask, 3.245 g of mPD (0.03 moles) and 11.051g of 3ClPA (0.0606 moles) are added. To the mixture in the flask, 100g molten sulfolane is added and the mixture is stirred. The temperature of the oil bath is slowly increased to 200°C. The heating is continued for at least 4 hours. At that point, the UPLC analysis of the reaction mass is measured for non-detect amount of residual reactants. To the reaction mixture, 10.949g BP (0.0588 moles) is added. To the stirring mixture, 13.835g of Na₂CO₃ (0.1305 moles) and 0.403 grams of HEGCl (0.0012 moles) are added as solids and the mixture is allowed to stir at 200 °C. GPC analysis relative to polystyrene standards would show the Mw build. The polymer is isolated as described in Example 1.

Table 1 summarizes the results of the Examples, which use different bases and solvents. As can be seen in the Table, K₂CO₃ alone did not provide high molecular weight polymer in either sulfolane or DPS as side reactions ensued. Low molecular weight polymer was provided when a combination of K₂CO₃ and Na₂CO₃ was used when using ODA as the diamine. Higher molecular weights were obtained with the addition of a catalyst, HEGCl.

**Table 1.**

| Entry | ClPAMI | Base | Solvent | Time (h) | Mw | PDI | Comments |
|---|---|---|---|---|---|---|---|
| 1 | ClPAMI | K₂CO₃ | Sulfolane | 12 | 10-15K | 2.5 | Turns dark within few hrs |
| 2 | ClPAMI | K₂CO₃ | DPS | 12 | 10-15K | 2.5 | Sticky mass not soluble in any solvent |
| 4 | ODA-ClPAMI | Na₂CO₃/ K₂CO₃ (3:1) | Sulfolane | 25 | 24055 | 2.6 | |
| 5 | ODA-ClPAMI | Na₂CO₃ | Sulfolane | 72 | 46780 | 2.92 | |
| 6 | ClPAMI | Na₂CO₃ | Sulfolane | 64 | 37966 | 2.62 | |
| 7 | ODA-ClPAMI | Na₂CO₃ | DPS | 64 | 42960 | 2.17 | |
| 8 | ODA-ClPAMI | Na₂CO₃ | Sulfolane | 64 | 54594 | 4.42 | 2 mol % HEGCl added |
| 9 | ODA-ClPAMI | Na₂CO₃ | DPS | 20 | 106908 | 3.71 | 2 mol % HEGCl added |
| 10 | ClPAMI | Na₂CO₃ | DPS | 32 | 69660 | 4.26 | 2 mol % HEGCl added |
| 11 | ClPAMI-DCDPS-DFBP | Na₂CO | Sulfolane | 35 | 35256 | 3.04 | 2 mol % HEGCl added |
| 12 | ClPAMI-DCDPS | Na₂CO | Sulfolane | 35 | 15091 | 2.49 | 2 mol % HEGCl added |
| 13 | ClPAMI-DFBP | Na₂CO | Sulfolane | 27 | 51282 | 3.56 | 2 mol % HEGCl added |
| 14 | ClPAMI-ODA/ClPAMI | Na₂CO | Sulfolane | 33 | 57909 | 3.89 | 2 mol % HEGCl added |

HO-Z-OH;

All ranges disclosed herein are inclusive of the endpoints, and the endpoints are independently combinable with each other. "Combinations" is inclusive of blends, mixtures, alloys, reaction products, and the like. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments," "an embodiment," and so forth, means that a particular element described in connection with the embodiment is included in at least one embodiment described herein, and may or may not be present in other embodiments.

Unless defined otherwise, technical and scientific terms used herein have the same meaning as is commonly understood by one of skill in the art to which this application belongs.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A method of making a polyetherimide, the method comprising:
contacting in a reaction vessel
a reactive substituted phthalic anhydride of the formula 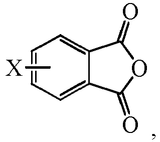
an organic diamine of the formula
H₂N-R-NH₂,
optionally, a chain terminating agent, and
optionally a imidization catalyst,
in a polar aprotic solvent under conditions effective to provide a reaction mixture comprising a substituted bisphthalimide of the formula 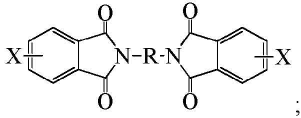 and
adding to the reaction mixture in the reaction vessel
an aromatic dihydroxy compound of the formula
HO-Z-OH;
a base comprising an alkali metal carbonate, an alkali metal phosphate, an alkali metal bicarbonate, an alkali metal acetate, or a combination comprising at least one of the foregoing;
optionally, a chain termination agent; and
a phase transfer catalyst comprising a hexaalkylguanidinium salt;
under conditions effective to provide a product mixture comprising the polyetherimide;
wherein, in the foregoing formulas,
X is chloro, bromo, fluoro, iodo, nitro, or a combination comprising at least one of the foregoing;
R is a C₆₋₂₀ aromatic hydrocarbon group or a halogenated derivative thereof, a straight or branched chain C₂₋₂₀ alkylene group, or a halogenated derivative thereof, a C₃₋₈ cycloalkylene group or halogenated derivative thereof, or a combination comprising at least one of the foregoing; and
Z is a group of the formula 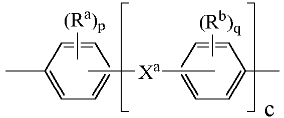 wherein
R^{a} and R^{b} are each independently a halogen atom or a monovalent C₁₋₆ alkyl group,
p and q are each independently integers of 0 to 4,
c is 0 to 4, and
X^{a} is a single bond, -O-, -S-, -S(O)-, -SO₂-, -C(O)-, or a C₁₋₁₈ organic bridging group.

2. The method of claim 1, wherein X is chloro, preferably wherein the reactive substituted phthalic anhydride comprises 4-chlorophthalic anhydride, 3-chlorophthalic anhydride, or a combination comprising at least one of the foregoing, more preferably wherein the reactive substituted phthalic anhydride comprises 4-chlorophthalic anhydride.

3. The method of any one or more of claims 1 to 2, wherein the polar aprotic solvent comprises sulfolane, diphenyl sulfone, dimethyl sulfoxide, N-methylpyrrolidinone, N,N-dimethylacetamide, dimethylformamide, hexamethylphosphoramide, anisole, veratrole, diphenylether, phenetole, an ionic liquid, or a combination comprising at least one of the foregoing, preferably sulfolane, diphenyl sulfone, or a combination comprising at least one of the foregoing.

4. The method of any one or more of claims 1 to 3, wherein contacting the reactive substituted phthalic anhydride and the organic diamine in the solvent is at a temperature of at least 130°C, or 150° to 275°C, or 160 to 250°C, or 170 to 200°C and for a time of 0.5 to 30 hours, or 1 to 20 hours, or 1 to 10 hours, or 2 to 8 hours, or 3 to 7 hours.

5. The method of any one or more of claims 1 to 4, wherein the base is an alkali metal carbonate, preferably wherein the base is sodium carbonate.

6. The method of any one or more of claims 1 to 5, wherein the phase transfer catalyst is hexaethylguanidinium chloride.

7. The method of any one or more of claims 1 to 6, wherein adding the aromatic dihydroxy compound, the alkali metal carbonate, and, optionally, the phase transfer catalyst to the reaction mixture, is at a temperature of at least 130°C, or 150° to 275°C, or 160 to 250°C, or 170 to 200°C and for a time of 0.5 to 100 hours, or 1 to 80 hours, or 10 to 75 hours, or 20 to 75 hours.

8. The method of any one or more of claims 1 to 7, wherein a dialkali metal salt of the dihydroxy aromatic compound having the formula M⁺⁻O-Z-O⁻⁺M is formed in situ after adding the dihydroxy aromatic compound, the alkali metal carbonate, and, optionally, the phase transfer catalyst to the reaction mixture.

9. The method of any one or more of claims 1 to 8, wherein the method further comprises isolating polyetherimide from the product mixture, preferably wherein isolating the polyetherimide is by filtration.

10. The method of any one or more of claims 1 to 9, wherein the method further comprises washing the polyetherimide, preferably washing the polyetherimide with acetone, a C₁₋₆ alcohol, water, a C₁₋₁₂ alkyl ketone, acetonitrile, or a combination comprising at least one of the foregoing.

11. The method of any one or more of claims 1 to 10, wherein the method further comprises drying the polyetherimide under heat, vacuum, or both.

12. The method of any one or more of claims 1 to 11, further comprising determining the stoichiometric molar ratio of the substituted phthalic anhydride to the organic diamine during the contacting of the substituted phthalic anhydride and the organic diamine, and optionally adjusting the stoichiometric molar ratio by adding additional substituted phthalic anhydride or organic diamine to the reaction mixture.

13. A method of making a polyetherimide according to claim 1, the method comprising:
contacting in a reaction vessel
a chlorophthalic anhydride of the formula 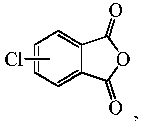
an organic diamine of the formula
H₂N-R-NH₂,
and
optionally a chain terminating agent,
in a polar aprotic solvent comprising sulfolane, diphenylsulfone, or a combination comprising at least one of the foregoing under conditions effective to provide a reaction mixture comprising a substituted bisphthalimide of the formula 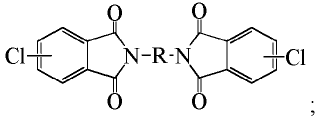 and
adding to the reaction mixture in the reaction vessel
an aromatic dihydroxy compound of the formula
HO-Z-OH,
an alkali metal carbonate,
optionally, a chain terminating agent, and
a hexaalkylguanidinium salt phase transfer catalyst;
under conditions effective to provide a product mixture comprising the polyetherimide;
wherein, in the foregoing formulas,
each R is independently meta-phenylene, para-phenylene, 4,4'-diphenylene ether, or a combination comprising at least one of the foregoing; and
Z is 4,4'- diphenylene isopropylidene.

14. The method of any one or more of claims 1 to 13,
wherein the reaction mixture comprises less than or equal to 5 mole percent of an impurity having a structure derived from at least one monomer prior to addition of the dihydroxy aromatic compound, the alkali metal carbonate, and, optionally, the phase transfer catalyst,
preferably wherein the impurity comprises residual reactive substituted phthalic anhydride or a derivative thereof, a product of reaction of one mole of the reactive substituted phthalic anhydride and one mole of the organic diamine, or a combination comprising at least one of the foregoing.

## Patentansprüche

1. Verfahren zur Herstellung eines Polyetherimids, wobei das Verfahren umfasst:
Inkontaktbringen, in einem Reaktionsgefäß, von
einem reaktiven substituierten Phthalsäureanhydrid der Formel 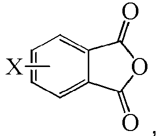
einem organischen Diamin der Formel
H₂N-R-NH₂,
optional einem Kettenabbruchmittel und
optional einem Imidisierungskatalysator
in einem polaren aprotischen Lösungsmittel unter Bedingungen, die dazu wirksam sind, ein Reaktionsgemisch bereitzustellen, umfassend ein substituiertes Bisphthalimid der Formel 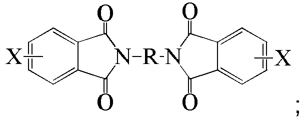 und
Zugeben, zu dem Reaktionsgemisch in dem Reaktionsgefäß, von
einer aromatischen Dihydroxyverbindung der Formel
HO-Z-OH;
einer Base, umfassend ein Alkalimetallcarbonat, ein Alkalimetallphosphat, ein Alkalimetallbicarbonat, ein Alkalimetallacetat oder eine Kombination, umfassend mindestens eines der Vorstehenden;
optional einem Kettenabbruchmittel und
einem Phasentransferkatalysator, umfassend ein Hexaalkylguanidiniumsalz;
unter Bedingungen, die dazu wirksam sind, ein Produktgemisch bereitzustellen, umfassend das Polyetherimid;
wobei in den vorstehenden Formeln
X Chlor, Brom, Fluor, Iod, Nitro oder eine Kombination, umfassend mindestens eines der Vorstehenden, ist;
R eine aromatische C₆₋₂₀-Kohlenwasserstoffgruppe oder ein halogeniertes Derivat davon eine gerad- oder verzweigtkettige C₂₋₂₀-Alkylengruppe oder ein halogeniertes Derivat davon, eine C₃₋₈-Cycloalkylengruppe oder ein halogeniertes Derivat davon oder eine Kombination, umfassend mindestens eine bzw. eines der Vorstehenden, ist; und
Z eine Gruppe der Formel 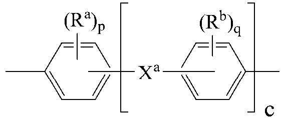 ist, wobei
R^{a} und R^{b} jeweils unabhängig ein Halogenatom oder eine einwertige C₁₋₆-Alkylgruppe sind,
p und q jeweils unabhängig ganze Zahlen von 0 bis 4 sind,
c 0 bis 4 ist und
X^{a} eine Einfachbindung, -O, -S-, -S(O)-, -SO₂-, -C(O)- oder eine organische C₁₋₁₈-Brückengruppe ist.

2. Verfahren nach Anspruch 1, wobei X Chlor ist, vorzugsweise wobei das reaktive substituierte Phthalsäureanhydrid 4-Chlorphthalsäureanhydrid, 3-Chlorphthalsäureanhydrid oder eine Kombination, umfassend mindestens eines der Vorstehenden, umfasst, mehr bevorzugt wobei das reaktive substituierte Phthalsäureanhydrid 4-Chlorphthalsäureanhydrid umfasst.

3. Verfahren nach einem oder mehreren der Ansprüche 1 bis 2, wobei das polare aprotische Lösungsmittel Sulfolan, Diphenylsulfon, Dimethylsulfoxid, N-Methylpyrrolidinon, N,N-Dimethylacetamid, Dimethylformamid, Hexamethylphosphoramid, Anisol, Veratrol, Diphenylether, Phenetol, eine ionische Flüssigkeit oder eine Kombination, umfassend mindestens eines bzw. einen der Vorstehenden, vorzugsweise Sulfolan, Diphenylsulfon oder eine Kombination, umfassend mindestens eines der Vorstehenden, umfasst.

4. Verfahren nach einem oder mehreren der Ansprüche 1 bis 3, wobei das Inkontaktbringen des reaktiven substituierten Phthalsäureanhydrid und des organischen Diamins in dem Lösungsmittel bei einer Temperatur von mindestens 130 °C oder 150 °C bis 275 °C oder 160 bis 250 °C oder 170 bis 200 °C und für eine Zeit von 0,5 bis 30 Stunden oder 1 bis 20 Stunden oder 1 bis 10 Stunden oder 2 bis 8 Stunden oder 3 bis 7 Stunden ist.

5. Verfahren nach einem oder mehreren der Ansprüche 1 bis 4, wobei die Base ein Alkalimetallcarbonat ist, vorzugsweise wobei die Base Natriumcarbonat ist.

6. Verfahren nach einem oder mehreren der Ansprüche 1 bis 5, wobei der Phasentransferkatalysator Hexaethylguanidiniumchlorid ist.

7. Verfahren nach einem oder mehreren der Ansprüche 1 bis 6, wobei das Zugeben der aromatischen Dihydroxyverbindung, des Alkalimetallcarbonats und optional des Phasentransferkatalysators zu dem Reaktionsgemisch bei einer Temperatur von mindestens 130 °C oder 150 °C bis 275 °C oder 160 bis 250 °C oder 170 bis 200 °C und für eine Zeit von 0,5 bis 100 Stunden oder 1 bis 80 Stunden oder 10 bis 75 Stunden oder 20 bis 75 Stunden ist.

8. Verfahren nach einem oder mehreren der Ansprüche 1 bis 7, wobei ein Dialkalimetallsalz der aromatischen Dihydroxyverbindung mit der Formel M⁺⁻O-Z-O⁻⁺M in situ nach dem Zugeben der aromatischen Dihydroxyverbindung, des Alkalimetallcarbonats und optional des Phasentransferkatalysators zu dem Reaktionsgemisch gebildet wird.

9. Verfahren nach einem oder mehreren der Ansprüche 1 bis 8, wobei das Verfahren ferner ein Isolieren von Polyetherimid von dem Produktgemisch umfasst, vorzugsweise wobei das Isolieren des Polyetherimids mittels Filtration ist.

10. Verfahren nach einem oder mehreren der Ansprüche 1 bis 9, wobei das Verfahren ferner ein Waschen des Polyetherimids, vorzugsweise ein Waschen des Polyetherimids mit Aceton, einem C₁₋₆-Alkohol, Wasser, einem C₁₋₁₂-Alkylketon, Acetonitril oder einer Kombination, umfassend mindestens eines bzw. einen der Vorstehenden, umfasst.

11. Verfahren nach einem oder mehreren der Ansprüche 1 bis 10, wobei das Verfahren ferner ein Trocknen des Polyetherimids unter Hitze, Vakuum oder beiden umfasst.

12. Verfahren nach einem oder mehreren der Ansprüche 1 bis 11, ferner umfassend ein Bestimmen des stöchiometrischen Molverhältnisses des substituierten Phthalsäureanhydrids zu dem organischen Diamin während des Inkontaktbringens des substituierten Phthalsäureanhydrids und des organischen Diamins und optional ein Justieren des stöchiometrischen Molverhältnisses durch Zugeben von zusätzlichem substituiertem Phthalsäureanhydrid oder organischem Diamin zu dem Reaktionsgemisch.

13. Verfahren zur Herstellung eines Polyetherimids nach Anspruch 1, wobei das Verfahren umfasst:
Inkontaktbringen, in einem Reaktionsgefäß, von
einem Chlorphthalsäureanhydrid der Formel 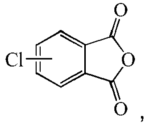
einem organischen Diamin der Formel
H₂N-R-NH₂,
und
optional einem Kettenabbruchmittel
in einem polaren aprotischen Lösungsmittel, umfassend Sulfon, Diphenylsulfon oder eine Kombination, umfassend mindestens eines der Vorstehenden, unter Bedingungen, die dazu wirksam sind, ein Reaktionsgemisch bereitzustellen, umfassend ein substituiertes Bisphthalimid der Formel 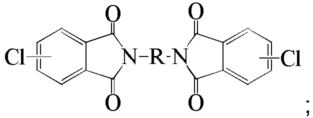 und
Zugeben, zu dem Reaktionsgemisch in dem Reaktionsgefäß, von einer aromatischen Dihydroxyverbindung der Formel
HO-Z-OH,
einem Alkalimetallcarbonat,
optional einem Kettenabbruchmittel und
einem Hexaalkylguanidiniumsalz-Phasentransferkatalysator;
unter Bedingungen, die dazu wirksam sind, ein Produktgemisch bereitzustellen, umfassend das Polyetherimid;
wobei in den vorstehenden Formeln
jedes R unabhängig meta-Phenylen, para-Phenylen, 4,4'-Diphenylenether oder eine Kombination, umfassend mindestens eines bzw. einen der Vorstehenden, ist; und
Z 4,4'-Diphenylenisopropyliden ist.

14. Verfahren nach einem oder mehreren der Ansprüche 1 bis 13,
wobei das Reaktionsgemisch weniger als oder gleich 5 Molprozent einer Verunreinigung mit einer Struktur, die von mindestens einem Monomer abgeleitet ist, vor der Zugabe der aromatischen Dihydroxyverbindung, des Alkalimetallcarbonats und optional des Phasentransferkatalysators umfasst,
vorzugsweise wobei die Verunreinigung restliches reaktives substituiertes Phthalsäureanhydrid oder ein Derivat davon, ein Produkt einer Reaktion von einem Mol des reaktiven substituierten Phthalsäureanhydrids und einem Mol des organischen Diamins oder eine Kombination, umfassend mindestens eines der Vorstehenden, umfasst.

## Revendications

1. Procédé de fabrication d'un polyétherimide, le procédé comprenant :
la mise en contact dans un récipient de réaction
d'un anhydride phtalique substitué réactif de formule 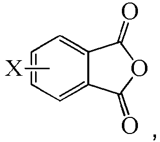
d'une diamine organique de formule
H₂N-R-NH₂,
éventuellement, un agent de terminaison de chaîne, et
éventuellement un catalyseur d'imidisation,
dans un solvant aprotique polaire dans des conditions efficaces pour fournir un mélange réactionnel comprenant un bisphtalimide substitué de formule 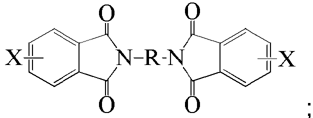 et
l'ajout au mélange réactionnel dans le récipient de réaction
d'un composé dihydroxy aromatique de formule
HO-Z-OH ;
d'une base comprenant un carbonate de métal alcalin, un phosphate de métal alcalin, un bicarbonate de métal alcalin, un acétate de métal alcalin, ou une combinaison comprenant au moins l'un des éléments précédents ;
éventuellement, d'un agent de terminaison de chaîne ; et
d'un catalyseur de transfert de phase comprenant un sel d'hexaalkylguanidinium ;
dans des conditions efficaces pour fournir un mélange de produits comprenant le polyétherimide ;
dans lequel, dans les formules précédentes,
X est un chloro, bromo, fluoro, iodo, nitro, ou une combinaison comprenant au moins l'un des éléments précédents ;
R est un groupe hydrocarboné aromatique en C₆₋₂₀ ou un dérivé halogéné de celui-ci, un groupe alkylène en C₂₋₂₀ à chaîne droite ou ramifiée, ou un dérivé halogéné de celui-ci, un groupe cycloalkylène en C₃₋₈ ou un dérivé halogéné de celui-ci, ou une combinaison comprenant au moins l'un des éléments précédents ; et
Z est un groupe de formule 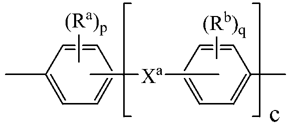 dans laquelle
R^{a} et R^{b} sont chacun indépendamment un atome d'halogène ou un groupe alkyle en C₁₋₆ monovalent,
p et q sont chacun indépendamment des nombres entiers de 0 à 4,
c est 0 à 4, et
X^{a} est une liaison simple, -O-, -S-, -S(O)-, -SO₂-, -C(O)-, ou un groupe de pontage organique en C₁₋₁₈.

2. Procédé selon la revendication 1, dans lequel X est un chloro, de préférence dans lequel l'anhydride phtalique substitué réactif comprend l'anhydride 4-chlorophtalique, l'anhydride 3-chlorophtalique, ou une combinaison comprenant au moins l'un des éléments précédents, plus préférablement dans lequel l'anhydride phtalique substitué réactif comprend l'anhydride 4-chlorophtalique.

3. Procédé selon l'une quelconque ou plusieurs des revendications 1 à 2, dans lequel le solvant aprotique polaire comprend le sulfolane, la diphénylsulfone, le diméthylsulfoxyde, la N-méthylpyrrolidinone, le N,N-diméthylacétamide, le diméthylformamide, l'hexaméthylphosphoramide, l'anisole, le vératrole, le diphényléther, le phénétole, un liquide ionique, ou une combinaison comprenant au moins l'un des solvants précédents, de préférence le sulfolane, la diphénylsulfone, ou une combinaison comprenant au moins l'un des solvants précédents.

4. Procédé selon l'une quelconque ou plusieurs des revendications 1 à 3, dans lequel la mise en contact de l'anhydride phtalique substitué réactif et de la diamine organique dans le solvant se fait à une température d'au moins 130 °C, ou de 150° à 275 °C, ou de 160 à 250 °C, ou de 170 à 200 °C et pendant une durée de 0,5 à 30 heures, ou de 1 à 20 heures, ou de 1 à 10 heures, ou de 2 à 8 heures, ou de 3 à 7 heures.

5. Procédé selon l'une quelconque ou plusieurs des revendications 1 à 4, dans lequel la base est un carbonate de métal alcalin, de préférence dans lequel la base est le carbonate de sodium.

6. Procédé selon l'une quelconque ou plusieurs des revendications 1 à 5, dans lequel le catalyseur de transfert de phase est le chlorure d'hexaéthylguanidinium.

7. Procédé selon l'une quelconque ou plusieurs des revendications 1 à 6, dans lequel l'ajout du composé dihydroxy aromatique, du carbonate de métal alcalin et, éventuellement, du catalyseur de transfert de phase au mélange réactionnel, s'effectue à une température d'au moins 130 °C, ou de 150 ° à 275 °C, ou de 160 à 250 °C, ou de 170 à 200 °C et pendant une durée de 0,5 à 100 heures, ou de 1 à 80 heures, ou de 10 à 75 heures, ou de 20 à 75 heures.

8. Procédé selon l'une quelconque ou plusieurs des revendications 1 à 7, dans lequel un sel de métal dialcalin du composé dihydroxy aromatique ayant la formule M⁺⁻O-Z-O⁻⁺M est formé in situ après l'ajout du composé dihydroxy aromatique, du carbonate de métal alcalin et, éventuellement, du catalyseur de transfert de phase au mélange réactionnel.

9. Procédé selon l'une quelconque ou plusieurs des revendications 1 à 8, dans lequel le procédé comprend en outre l'isolement du polyétherimide du mélange de produits, de préférence dans lequel l'isolement du polyétherimide s'effectue par filtration.

10. Procédé selon l'une quelconque ou plusieurs des revendications 1 à 9, dans lequel le procédé comprend en outre le lavage du polyétherimide, de préférence le lavage du polyétherimide avec de l'acétone, un alcool en C₁₋₆, de l'eau, une alkylcétone en C₁₋₁₂, de l'acétonitrile, ou une combinaison comprenant au moins l'un des éléments précédents.

11. Procédé selon l'une quelconque ou plusieurs des revendications 1 à 10, dans lequel le procédé comprend en outre le séchage du polyétherimide à la chaleur, sous vide ou les deux.

12. Procédé selon l'une quelconque ou plusieurs des revendications 1 à 11, comprenant en outre la détermination du rapport molaire stœchiométrique de l'anhydride phtalique substitué à la diamine organique pendant la mise en contact de l'anhydride phtalique substitué et de la diamine organique, et éventuellement l'ajustement du rapport molaire stœchiométrique par l'ajout d'anhydride phtalique substitué ou de diamine organique supplémentaire au mélange réactionnel.

13. Procédé de fabrication d'un polyétherimide selon la revendication 1, le procédé comprenant :
la mise en contact dans un récipient de réaction
d'un anhydride chlorophtalique de formule 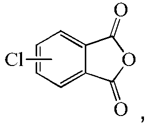
d'une diamine organique de formule
H₂N-R-NH₂,
et
éventuellement d'un agent de terminaison de chaîne,
dans un solvant aprotique polaire comprenant le sulfolane, la diphénylsulfone ou
une combinaison comprenant au moins l'un des solvants précédents dans des conditions efficaces pour fournir un mélange réactionnel comprenant un bisphtalimide substitué de formule 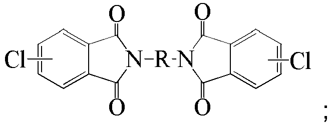 et
l'ajout au mélange réactionnel dans le récipient de réaction
d'un composé dihydroxy aromatique de formule
HO-Z-OH,
d'un carbonate de métal alcalin,
éventuellement, d'un agent de terminaison de chaîne, et
d'un catalyseur de transfert de phase sel d'hexaalkylguanidinium ;
dans des conditions efficaces pour fournir un mélange de produits comprenant le polyétherimide ;
dans lequel, dans les formules précédentes,
chaque R est indépendamment le méta-phénylène, le para-phénylène, le 4,4'-diphénylène éther, ou une combinaison comprenant au moins l'un des éléments précédents ; et
Z est le 4,4'-diphénylène isopropylidène.

14. Procédé selon l'une quelconque ou plusieurs des revendications 1 à 13,
dans lequel le mélange réactionnel comprend 5 pour cent en moles ou moins d'une impureté ayant une structure dérivée d'au moins un monomère avant l'ajout du composé dihydroxy aromatique, du carbonate de métal alcalin et, éventuellement, du catalyseur de transfert de phase,
de préférence dans lequel l'impureté comprend de l'anhydride phtalique substitué réactif résiduel ou un dérivé de celui-ci, un produit de réaction d'une mole de l'anhydride phtalique substitué réactif et d'une mole de la diamine organique, ou une combinaison comprenant au moins l'un des éléments précédents.
